# EUROPÄISCHE PATENTANMELDUNG

(11) **EP 1 331 109 A2**
(43) Veröffentlichungstag der Anmeldung: **30.07.2003**
(21) Anmeldenummer: 02450273.4
(22) Anmeldetag: 02.12.2002
(51) Int. Cl.: B60C 27/10

(54) **Gleitschutzkette**

(30) Priorität: 24.01.2002 AT 1172002; 24.01.2002 AT 1162002; 04.03.2002 AT 3342002; 04.04.2002 AT 5282002
(71) Anmelder: PEWAG AUSTRIA GmbH, A-8010 Graz (AT)
(72) Erfinder: Fleischhacker, Gerhard, 9330 Althofen (AT)
(74) Vertreter: Matschnig, Franz, Dipl.-Ing.

(57) **Zusammenfassung**

Die Erfindung betrifft eine Gleitschutzkette mit einem Laufnetz (LAU) und einer mit diesem verbundenen inneren Haltevorrichtung (HAL), welche in einem montierten Zustand am einer inneren Seitenflanke (FLA) eines Reifens (REI) mittels einer Verschlusseinrichtung (VER) lösbar zu einem Ring verschließbar ist, wobei das Laufnetz (LAU) in montiertem Zustand weiters an der Außenseite des Reifens (REI) von zumindest einer Haltespannvorrichtung (SPR) gespannt ist. Erfindungsgemäß ist die innere Haltevorrichtung (HAL) zumindest abschnittsweise aus einem elastischen Zugelement (SEI) besteht, welches mit einem freien Ende (EN) in der Verschlusseinrichtung (VER) lösbar fixierbar ist, sodass die innere Haltevorrichtung (HAL) zu einem Ring geschlossen ist, weiters die Haltevorrichtung (HAL) eine Fixiervorrichtung (FIX) umfasst, wobei das Zugelement (SEI) durch das Fixierelement (FIX) in Längsrichtung (A, B) verschiebbar ist, und der zwischen der Fixiervorrichtung (FIX) und dem freien Ende (EN) des Zugelementes (SEI) befindliche Abschnitt (ABS, ABS') des Zugelementes (SEI) gegen eine Rückstellkraft verlängerbar ist, und das Zugelement (SEI) zumindest in einem verlängerten Zustand mit der Fixiervorrichtung (FIX) gegen die Rückstellkraft lösbar fixierbar ist.

## Beschreibung

Die Erfindung betrifft eine Gleitschutzkette mit einem Laufnetz und einer mit diesem verbundenen inneren Haltevorrichtung, welche in einem montierten Zustand an einer inneren Seitenflanke eines Reifens mittels einer Verschlusseinrichtung lösbar zu einem Ring verschließbar ist, wobei das Laufnetz in montiertem Zustand weiters an der Außenseite des Reifens von zumindest einer Haltespannvorrichtung gespannt ist.

Das Anlegen von Schneeketten wird von einer überwiegenden Anzahl von Autofahrern als unangenehm und schwierig empfunden. Aus diesem Grund wird oftmals auf das Anlegen von Gleitschutzketten auf durch Glätte gefährdeten Streckenabschnitten verzichtet, womit ein großes Sicherheitsrisiko verbunden ist. Um dieses Sicherheitsrisiko zu vermindern ist es notwendig, dass Gleitschutzketten leicht zu montieren und ebenso leicht wieder zu demontieren sind.

In der Praxis hat sich herausgestellt, dass Gleitschutzketten mit einer zu einem Ring verbindbaren Haltevorrichtung für ein Laufnetz der Forderung nach einer schnellen und einfachen Montage am ehesten gerecht werden. Üblicherweise liegt hierbei die Haltevorrichtung an der Innenflanke eines Reifens an.

Eine Gleitschutzkette der eingangs genannten Art ist beispielsweise aus der DE 199 47 855 A1 bekannt geworden. Die bekannte Gleitschutzkette weist eine zu einem Ring verbindbare Haltevorrichtung auf, beispielsweise einen federelastischen Montagebügel oder ein Stahlseil. Die beiden Enden der Haltevorrichtung weisen je ein Verschlussteil auf, mit welchen die Haltevorrichtung zu einem Ring geschlossen werden kann.

Die DE 36 43 652 C1 offenbart ebenfalls eine Gleitschutzkette der oben genannten Art. Diese Kette weist ebenfalls eine ringförmige federelastische Haltevorrichtung auf, die mittels zwei Verschlussteilen geschlossen bzw. geöffnet werden kann. Weitere Gleitschutzketten der eingangs genannten Art sind beispielsweise auch in der DE 34 00 78 C2 und der DE 69216 237 T2 beschrieben.

Nachteilig an den bekannten Gleitschutzketten ist vor allem, dass die Verschlussteile, welche zum Schließen und Öffnen der Haltevorrichtung dienen, schwierig zu handhaben sind. Darüber hinaus ist die Montage und Demontage bei den bekannten Vorrichtungen schwierig, da zum Lösen der Verschlussteile hinter den Fahrzeugreifen bzw. in den Radkasten gegriffen werden muss.

Es ist daher eine Aufgabe der Erfindung, einen Weg zu schaffen, der eine einfache und schnelle Montage und Demontage der Gleitschutzkette ermöglicht.

Diese Aufgabe wird mit einer eingangs erwähnten Gleitschutzkette dadurch gelöst, dass erfindungsgemäß die innere Haltevorrichtung zumindest abschnittsweise aus einem elastischen Zugelement besteht, welches mit einem freien Ende in der Verschlusseinrichtung lösbar fixierbar ist, sodass die innere Haltevorrichtung zu einem Ring geschlossen ist, weiters die Haltevorrichtung eine Fixiervorrichtung umfasst, wobei das Zugelement durch die Fixiervorrichtung hindurch in Längsrichtung verschiebbar ist, und der zwischen der Fixiervorrichtung und dem freien Ende des Zugelementes befindliche Abschnitt des Zugelementes gegen eine Rückstellkraft verlängerbar ist, und das Zugelement zumindest in einem verlängerten Zustand mit der Fixiervorrichtung gegen die Rückstellkraft lösbar fixierbar ist.

Bei einer vorliegenden Gleitschutzkette ist es durch die erfindungsgemäße Ausgestaltung der inneren Haltevorrichtung möglich, die Kette über den Fahrzeugreifen zu legen, wobei dann der Abschnitt des elastischen Zugelementes zwischen der Fixiervorrichtung und dem freien Ende des Zugelementes, welches in der Verschlusseinrichtung fixiert ist, vor dem Reifen auf der Seite des Benutzers zum Liegen kommt. Durch ein einfaches Lösen der Fixiervorrichtung von der Vorderseite des Reifens her wird dann der vor dem Reifen liegende Abschnitt des Zugelementes hinter den Reifen gezogen und die Kette wird gespannt.

Bei einer konkreten Ausführungsform wird die Rückstellkraft von einem Federelement ausgeübt.

Besonders einfach lässt sich dabei die Erfindung gestalten, wenn das Federelement ein elastisches Element ist, welches mit einem zweiten Ende des Seiles verbunden ist.

Beispielsweise ist das elastische Element ein Band oder Seil.

Bei einer anderen, einfachen Ausführungsform ist das gesamte Zugelement ein elastisches Seil.

Es kann aber auch vorgesehen sein, dass die Haltevorrichtung eine Speichervorrichtung zum Speichern zumindest eines Abschnittes des Zugelementes umfasst.

Dabei umfasst die Speichervorrichtung ein von einer Spiralfeder belastetes Rückstellrad zum Aufwickeln eines Abschnittes des Zugelementes.

Um eine stabile, vorgegebene Form der inneren Haltevorrichtung zu gewährleisten, ist das Seil in einem Führungsrohr geführt, welches mit dem Laufnetz verbunden.

Vorteilhaft ist es weiters, wenn das Zugelement in dem Bereich zwischen der Verschlusseinrichtung und der Fixiervorrichtung mit der Laufkette gelenkig und verschiebbar verbunden ist. Bei einem Spannen der inneren Haltevorrichtung wird dann die Kette von dem Abschnitt des Zugelementes, welches hinter den Reifen gezogen wird, über die Lauffläche des Reifens gezogen und gespannt.

Zweckmäßigerweise ist dabei das Zugelement mit der Laufkette mittels einer oder mehreren Hülsen bzw. Gleitringen, welche auf die Netzkette aufgeschoben ist/sind, verbunden.

Um ein einfaches Lösen des freien Endes des elastischen Zugelementes aus der Verschlusseinrichtung bei einer Demontage der Kette zu erlauben, und gleichzeitig in montiertem Zustand die innere Haltevorrichtung zuverlässig zu einem Ring zu schließen, besteht die Verschlusseinrichtung aus einem Rohr sowie einem Aufnahmeelement für das freie Ende des Zugelementes, wobei das Aufnahmeelement über zumindest ein Verbindungselement mit der Laufkette bzw. einer Seitenkette der Laufkette verbunden und in gespannten Zustand der Laufkette mit dem aufgenommenen freien Ende des Zugelementes in das Rohr eingezogen und in dieser Position die Verbindung des Zugelementes mit dem Aufnahmeelement gegen Lösen gesichert ist.

Ein einfaches Lösen des Ringes bei der Demontage ist gegeben, wenn das freie Ende des Zugelementes einen Kugelkopf aufweist und das Aufnahmeelement eine Kugelkopfaufnahme für den Kugelkopf sowie einen sich daran in Richtung des Zugelementes anschließenden, sich verjüngenden Aufnahmebereich für einen Abschnitt des Zugelementes, und einen seitlichen Schlitz zum Einbringen des freien Endes des Zugelementes in das Aufnahmeelement besitzt.

Die Demontage wird erleichtert, wenn das Aufnahmeelement in gespannten Zustand der Laufkette gegen die Rückstellkraft einer Feder in das Rohr gezogen ist.

Dabei ist in einem dem Zugelement abgewandten Bereich das Aufnahmeelement mit einem Fortsatz verbunden, welcher mit einem Verbindungselement gelenkig verbunden und von diesem in gespanntem Zustand der Laufkette zumindest abschnittsweise in das Rohr hineingezogen ist, sodass die Verbindung zwischen Zugelement und Aufnahmeelement zuverlässig hergestellt ist, und das Verbindungselement in entspanntem Zustand der Laufkette in das Rohr eingezogen ist, sodass das Aufnahmeelement zumindest mit dem den Schlitz umfassenden Bereich aus dem Rohr herausragt, wodurch ein einfaches Lösen des freien Endes aus der Aufnahme möglich ist.

Das eine Verbindungselement weist eine Nase auf, mittels welcher es in einem gespannten Zustand der Laufkette in einer stabilen Position an einer Außenseite des Rohres fixierbar ist.

Bei einer erprobten Ausführungsform steht das Verbindungselement sowohl mit einem Kettenelement als auch mit einem elastischen Element, welches in entspanntem Zustand kürzer als das Kettenelement ist, in Verbindung, wie dies später noch ausführlicher erläutert wird.

Bei einer anderen Ausführungsform weist die Verschlusseinrichtung zwei Verschlussteile auf, wobei die beiden Verschlussteile je eine plattenförmige Basis aufweisen und im wesentlichen entlang einer zu den beiden plattenförmigen Basen parallelen Ebene in eine Schließposition bewegbar sind, in welcher sie lösbar ineinander greifen, wobei die Basis eines ersten der beiden Verschlussteile eine Haltenase aufweist, von der Basis des zweiten Verschlussteils abstehende, einander gegenüberliegende Stege zum Führen der Basis des ersten Verschlussteils in die Schließposition vorgesehen sind, wobei einer der Stege in der Schließposition zumindest abschnittsweise von der Haltenase umfasst ist, sowie ein der Haltenase gegenüberliegender Rücken der Basis des ersten Verschlussteils von dem anderen Steg abgestützt ist, und die Verschlussteile in montiertem Zustand durch über das an den beiden Verschlussteilen angreifende Laufnetz eingeleitete Zugkräfte in der Schließposition gehalten sind.

Dadurch wird ein weitgehend selbsttätiges Lösen der Gleitschutzkette vom Reifen bei der Demontage ermöglicht. Da die beiden Verschlussteile durch die über das Laufnetz eingeleiteten Zugkräfte in der Schließposition gehalten werden, lassen sich diese beiden Teile bei Fehlen der haltenden Zugkräfte ohne bzw. mit sehr geringem Aufwand voneinander lösen. Durch Öffnen von das Laufnetz spannenden Spannschlössern können die Verschlussteile entlastet und beispielsweise durch kurzes Rütteln an der Laufkette voneinander gelöst werden, wodurch sich die Haltevorrichtung lösen und das Laufnetz vom Reifen gezogen werden kann.

Bei einer bevorzugten Ausführungsform weist zumindest einer der Stege eine Abwinkelung zur plattenförmigen Basis des zweiten Verschlussteils auf.

Eine besonders günstige Variante zur Einleitung der Zugkräfte in die Verschlussteile sieht vor, dass die beiden Verschlussteile an ihren einander abgewandten Endbereichen mit je einem Kettenstrang des Laufnetzes verbunden sind.

Eine besonders gute Fixierung der Verschlussteile in der Schließposition lässt sich dadurch verwirklichen, dass die beiden Kettenstränge in montiertem Zustand im Bereich der inneren Seitenflanken anliegen und in Richtung der Lauffläche des Reifens von einer normal zur Seitenflanke verlaufenden Mittelebene der beiden Verschlussteile fortweisen.

Ein Selbstlösen der beiden Verschlussteile voneinander bei der Demontage der Gleitschutzkette wird dadurch erleichtert, dass der erste Verschlussteil in einem von dem Rücken in die Haltenase übergehenden Bereich der Basis einen Krümmungsradius aufweist, der größer als der Normalabstand zwischen den beiden Stegen des zweiten Verschlussteils ist.

Die Befestigung der Kettenstränge an den Verschlusselementen lässt sich dadurch vereinfachen, dass die beiden Endbereiche von der jeweiligen Basis weggebogen sind und eine Bohrung zur Aufnahme eines mit dem jeweiligen Kettenstrang verbundenen Verbindungselements aufweist.

Die Montage der Gleitschutzkette kann dadurch erleichtert werden, dass die Verschlussteile um die Längsachse der Haltevorrichtung drehbar gelagert sind.

Eine Variante der Erfindung sieht vor, dass an jedem Verschlussteil ein einem Endabschnitt der Haltevorrichtung zugeordneter Endbereich um den jeweiligen Endabschnitt der Haltevorrichtung gebogen ist.

Vorteilhafterweise ist jedes der Verschlussteile einstückig gefertigt.

Um eine optimale Montage zu gewährleisten, weist das erste Verschlusselement einen Anschlag für das zweite Verschlusselement auf, welcher die Bewegung entlang der Längserstreckung der beiden Verschlusselemente in die Schließposition begrenzt.

Damit eine einfache, lösbare Fixierung des elastischen Zugelementes möglich ist, ist eine Fixiervorrichtung Bestandteil der inneren Haltevorrichtung, welche aus einem Gehäuse besteht, durch welches das Zugelement über Gehäuseöffnungen in Längsrichtung bewegbar ist, mit zumindest einem um eine Achse drehbaren Fixierelement, wobei in einem Kontaktbereich zwischen dem zumindest einen Fixierelement und dem Zugelement die Bewegungsrichtung des Zugelementes im wesentlichen normal zu der Achse des Fixierelementes verläuft, und das Fixierelement ausgehend von einer Nullstellung zumindest in einer Umfangrichtung eine Klemmfläche besitzt, mittels welcher das Zugmittel gegen zumindest ein Gegenelement klemmbar und dadurch in einer Bewegungsrichtung fixierbar ist, und wobei eine weitere Klemmfläche vorgesehen ist, wobei die Bewegungsrichtung des Zugelementes in dem Kontaktbereich zwischen der weiteren Klemmfläche im wesentlichen normal zu der Achse verläuft, die Klemmfläche sich ausgehend von der Nullstellung in einer zu der Umfangrichtung der ersten Klemmfläche entgegengesetzten Umfangsrichtung eines Fixierelementes erstreckt, und das Zugelement zwischen der zweiten Klemmfläche und einem Gegenelement einklemmbar und in zu der ersten Bewegungsrichtung entgegengesetzter Richtung blockierbar ist, und wobei in der Klemmposition der einen Klemmfläche die andere Klemmfläche aus der Klemmposition herausbewegt oder herausbewegbar ist.

Vorzugsweise sind dabei die Drehbewegungen der Klemmflächen miteinander gekoppelt.

Je nach Stellung der Klemmflächen wird das Seil in eine Bewegungsrichtung freigegeben, während es in der anderen Richtung fixiert ist. Durch die Koppelung der Drehbewegung der Klemmflächen ist dabei eine einfache Bedienung gewährleistet, die es nicht notwendig macht, mehrere Vorrichtungen unabhängig voneinander zu bedienen.

Bei einer ersten Ausführungsform der Erfindung hat dabei genau ein Fixierelement ausgehend von einer Nullstellung in beiden Umfangrichtungen je eine Klemmfläche, sodass die "Koppelung" der Drehbewegung der beiden Klemmflächen einfach durch die Drehbewegung des einen Fixierelementes erfolgt, da bei einem Drehen der einen Klemmfläche in ihre klemmende Position und die andere Klemmfläche aus ihrer klemmenden Position weggedreht wird.

Bei einer anderen Ausführungsform der Erfindung haben zwei Fixierelemente je eine sich ausgehend von einer Nullstellung in einander entgegengesetzte Umfangrichtungen erstreckende Klemmfläche.

Um eine zuverlässige Klemmung zu erlauben, die keine Beschädigungen an dem Zugelement verursacht, weisen die Fixierelemente exzentrische Bereiche als Klemmflächen auf.

Besonders flach lässt sich die Fixiervorrichtung gestalten, wenn das zumindest eine Fixierelement eine Scheibe ist.

In der Regel ist es ausreichend, wenn der Öffnungswinkel des exzentrischen Bereiches in eine Umfangrichtung maximal 12 ° beträgt.

Damit ein Benutzer auf einfache Weise das Zugelement mit der Fixiervorrichtung in eine Bewegungsrichtung fixieren kann, hat das zumindest eine Fixierelement einen aus dem Gehäuse herausragenden Fortsatz, mittels welchem das Fixierelement zu einer im Kontaktbereich zu dem Zugelement zu der Blockierrichtung des Zugelementes gleichgerichteten Verdrehung gegen die von zumindest einem Rückstellmittel ausgeübte Rückstellkraft verdrehbar ist.

Üblicherweise ist das zumindest eine Rückstellmittel eine Druckfeder.

Bei zwei Fixierelementen erfolgt weiters die Kopplung der Drehbewegung der beiden Klemmflächen mittels der zumindest einen Feder. Dabei ist die Feder zwischen zwei Fixierelementen eingeklemmt, wobei die Angriffspunkte des Federelementes so gewählt sind, dass die Wirklinie des Federelementes bei einem Fixierelement außerhalb des Drehpunktes und bei dem zweiten Fixierelement im wesentlichen durch den Drehpunkt verläuft.

Bei einer einfachen Ausführungsform der Erfindung mir genau einem Fixierelement ist die Feder im Inneren des Gehäuses abgestützt und die Wirklinie verläuft durch den Angriffspunkt außerhalb des Drehpunktes des Fixierelementes.

Bei einer einfachen Ausführungsform ist das zumindest eine Gegenelement in dem Gehäuse fest montiert.

Eine wesentlich bessere wird allerdings erreicht, wenn zumindest eines der Gegenelemente um eine Achse drehbar ist, welche im wesentlichen parallel zu der Drehachse des korrespondierenden Fixierelementes ist.

Weiters kann die Klemmwirkung noch gesteigert werden, wenn zumindest die Klemmfläche des Fixierelementes und/oder eine Kontaktfläche des zumindest einen Gegenelementes aus Kunststoff ist, wenn die Klemmfläche und/oder eine Kontaktfläche des zumindest einen Gegenelementes Rillen hat, oder wenn die Klemmfläche und/oder eine Kontaktfläche des zumindest einen Gegenelementes aufgeraut ist.

Im folgenden ist die Erfindung an Hand der Zeichnung näher erläutert. In dieser zeigen
- Fig. 1: die Rückseite eines Fahrzeugreifens mit montierter Fahrzeugkette,
- Fig. 2: die Vorderseite des Fahrzeugreifens nach Fig. 1 mit einer Fahrzeugkette,
- Fig. 3: die Reifenunterseite des Fahrzeugreifens nach Fig. 1 und 2,
- Fig. 4: eine erste Ausführungsform einer Fixiervorrichtung in geöffnetem Zustand,
- Fig. 5: einen Schnitt durch eine Fixiervorrichtung nach Fig. 4 entlang der Linie II-II,
- Fig. 6: eine zweite Ausführungsform einer erfindungsgemäßen Fixiervorrichtung,
- Fig. 7a - 7c: einen Verschluss für eine erfindungsgemäße Gleitschutzkette in verschiedenen Montagezuständen,
- Fig. 8a, 8b: eine Detailansicht eines mit einem Ende in einer Aufnahme eines Verschlusses nach Figur 7a - 7c fixierten Endes eines Zugelementes,
- Fig. 9: einen weiteren Verschluss,
- Fig. 10: einen Schnitt entlang der Linie IV-IV in Fig. 12c,
- Fig. 11: einen Schnitt entlang V-V in Fig. 12c,
- Fig. 12a - 12f: die beiden Verschlussteile aus Fig. 9 in verschiedenen Montage/Demontagezuständen,
- Fig. 13: einen Schnitt entlang der Linie VII-VII in Fig. 12a,
- Fig. 14: eine Seitenansicht auf ein erstes Verschlussteil, welches eine Haltenase aufweist und
- Fig. 15: eine Draufsicht auf das Verschlussteil aus Fig. 14.

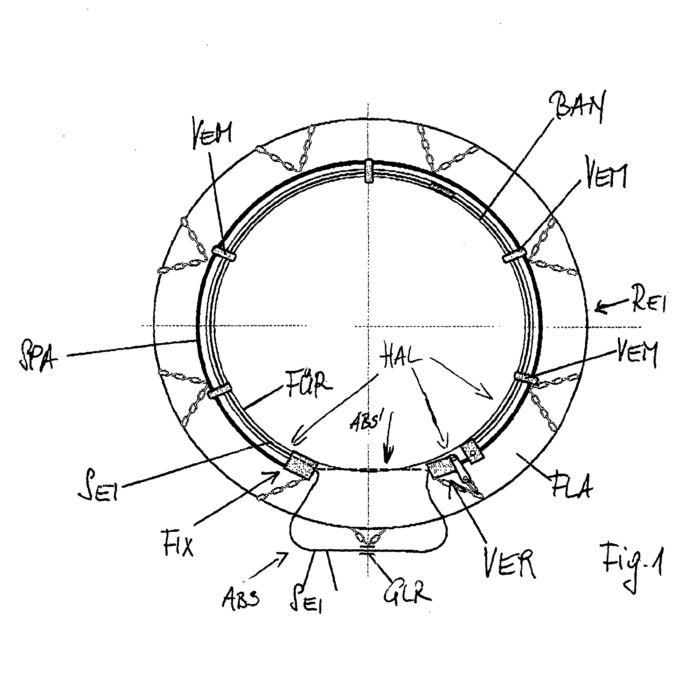

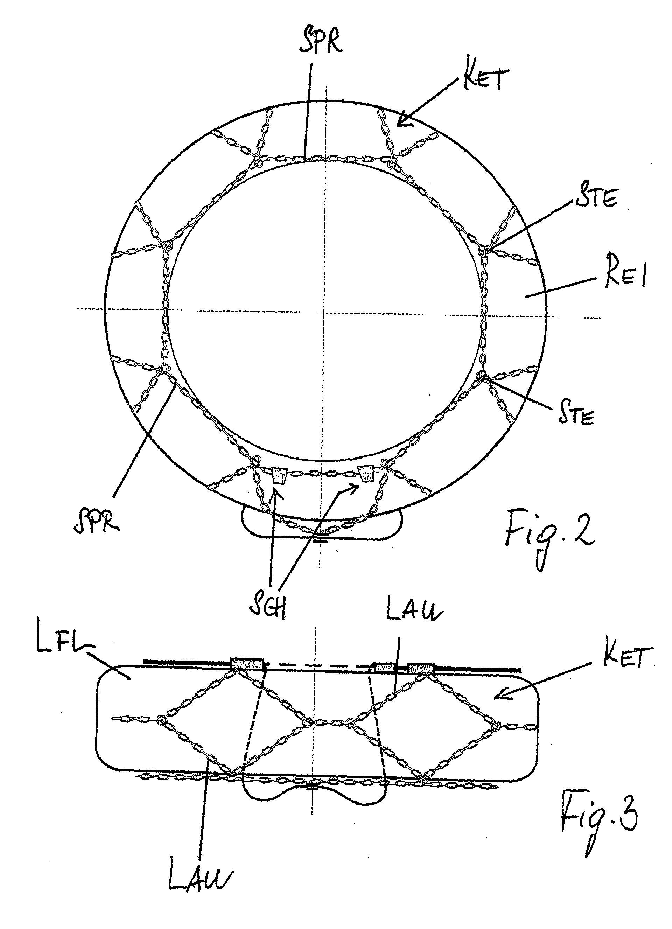

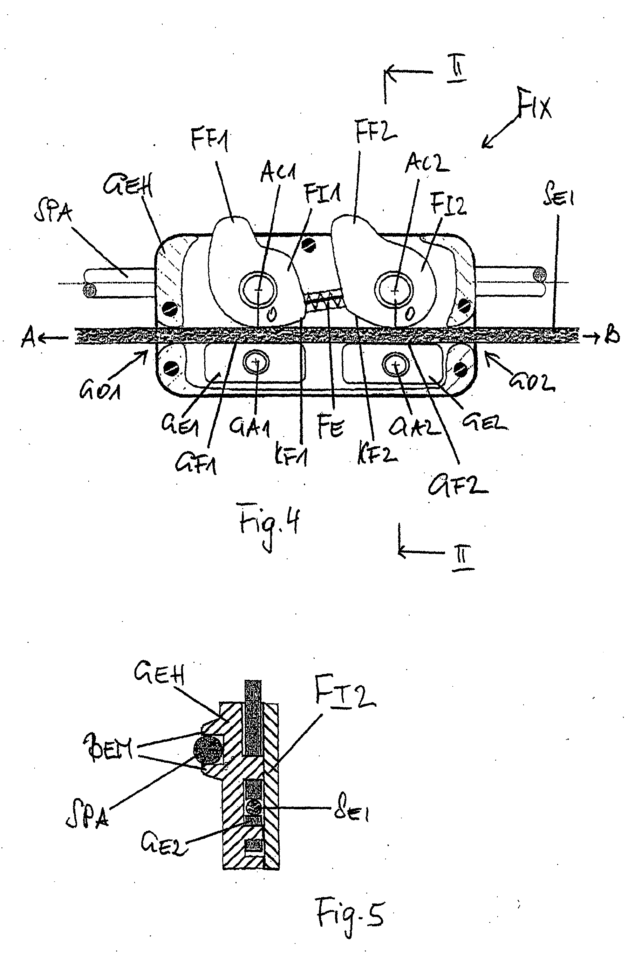

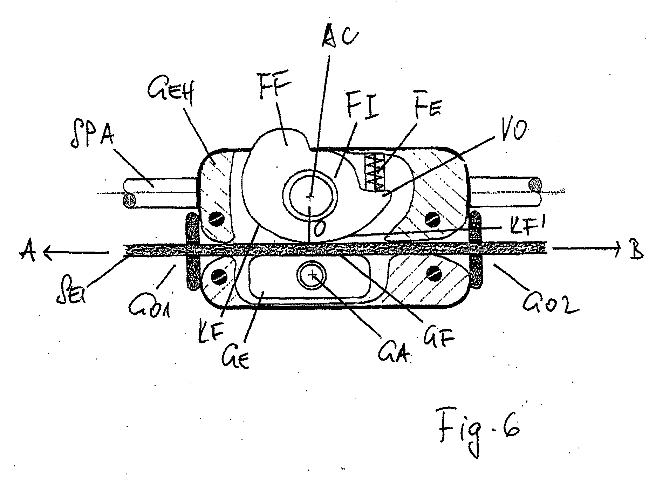

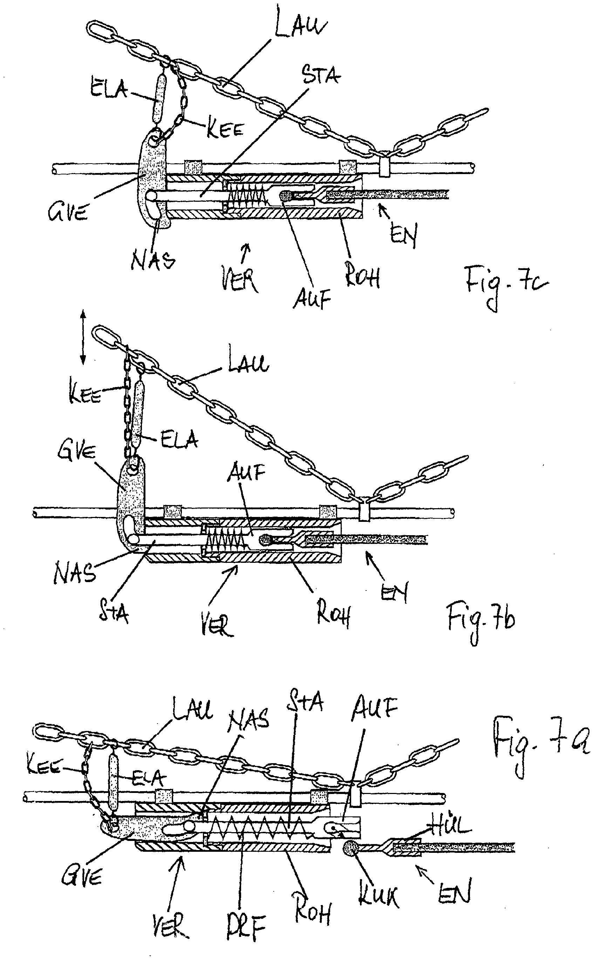

In den Figuren 1 - 3 ist ein Reifen REI mit einer montierten Fahrzeugkette KET, beispielsweise einer Schneekette, gezeigt. Die Kette KET besteht aus einer aus einer Verbindung von einzelnen Kettensträngen bzw. -gliedern gebildeten Laufkette LAU, die in montiertem Zustand im wesentlichen auf der Lauffläche LFL des Reifens REI aufliegt. Für einen stabilen und sicheren Sitz ist die Kette KET in montiertem Zustand bekannterweise sowohl an der Reifenaußenseite als auch an der Reifeninnenseite zu spannen. Dazu ist - wie Figur 2 zu entnehmen - die Laufkette LAU an ihrer Außenseite mit einer Spannvorrichtung, beispielsweise mit einer Spannkette SPR, an mehreren Stellen STE verbunden, und die im wesentlichen in Reifenumfangsrichtung verlaufende Spannkette SPR wird nach dem Anlegen mit einer entsprechenden, bekannten Schließvorrichtung SCH geschlossen.

Damit die Kette KET auf dem Reifen REI gespannt ist, ist weiters noch ein Spannen der Kette auf der Innenseite des Reifens REI notwendig. Bei herkömmlichen Gleitschutzketten mit bekannten Halte- bzw. Spannvorrichtungen an der Innenseite des Reifens, d. h. an einer inneren, dem Fahrzeug zugewandten Flanke FLA des Reifens, besteht dabei immer das Problem, dass zum Schließen der Spannvorrichtung hinter den Reifen gegriffen werden muss. Dies ist aus vielen Gründen nachteilig. Bei den meisten Fahrzeugen ist es sehr schwer, mit einer oder mehreren Händen hinter den Reifen zu greifen, und außerdem besteht die Gefahr einer Beschmutzung des Benutzers.

Bei der erfindungsgemäßen Gleitschutzkette hingegen ist ein solches Greifen auf die Rückseite des Reifens nicht mehr notwendig, wie dies im folgenden näher läutert ist.

Wie weiter der Figur 1 zu entnehmen ist, besteht die im wesentlichen in Reifenumfangrichtung an der Reifeninnenseite verlaufende, an dem Laufnetz LAU der Gleitschutzkette KET befestigte innere Haltevorrichtung HAL im wesentlichen aus einem flexiblen Zugelement SEI, beispielsweise einem Seil, das über entsprechende Verbindungsmittel VEM - wie weiter unten noch näher erläutert - mit der Laufkette LAU verbunden ist. Neben diesem flexiblen Zugelement SEI weist die innere Haltevorrichtung HAL noch eine Fixiervorrichtung FIX für das Zugelement SEI sowie eine Verschlussvorrichtung VER auf, die mit der Laufkette LAU verbunden ist.

Ausgehend von der Verschlussvorrichtung VER verläuft die innere Haltevorrichtung HAL über einen großen Bereich des Umfangs des Reifens, etwa wie in der Figur 1 über einen Bereich von mehr als 320 °. Das Zugelement SEI ist dort schließlich entlang seiner Längsrichtung verschieblich durch eine Fixiervorrichtung FIX geführt, welche ebenfalls mit dem Laufnetz LAU der Kette KET verbunden ist. Mit seinem zweiten, außerhalb der Fixiervorrichtung FIX liegenden Ende ist das Zugelement SEI in der Verschlussvorrichtung VER arretierbar, sodass die Haltevorrichtung HAL geschlossen werden kann.

Wie in Figur 1 dargestellt, ist das Zugelement SEI vorzugsweise in einem elastischen, aber relativ formstabilen Führungsrohr FÜR geführt, damit eine gewisse stabile Gestalt der Haltevorrichtung HAL gegeben ist. Das Führungsrohr FÜR ist an einem Spannring SPA, wie er von herkömmlichen Haltevorrichtungen bekannt ist, angebracht, welcher wiederum mit der Laufkette LAU verbunden ist. Der Spannring erstreckt sich dabei allerdings nicht wie bei diesen bekannten Haltervorrichtungen über den gesamten Umfang, sondern lediglich über ein relativ großes Kreissektor, der sich zwischen der Verschlussvorrichtung VER und der Fixiervorrichtung FIX erstreckt.

Die Verbindung Führungsrohr FÜR - Verschlusseinrichtung VER ist bei der gezeigten Ausführungsform über den Spannring SPA gegeben, es kann aber auch das Führungsrohr unmittelbar mit der Verschlusseinrichtung VER verbunden sein, da grundsätzlich ein solcher Spannring SPA nicht notwendig ist, d. h. es kann auch das Führungsrohr FÜR - vorausgesetzt, dass es über die entsprechende Stabilität verfügt - auch unmittelbar an der Laufkette LAU angebracht sein.

Das Führungsrohr FÜR muss auch nicht - wie dargestellt - durchgehend sein, sondern kann sich auch nur in bestimmten Bereichen erstrecken.

Schließlich besteht die innere Haltevorrichtung HAL noch aus einem Speichermittel, welches das Verlängern des zwischen dem offenen Ende des Zugelementes SEI und der Fixiervorrichtung FIX liegenden Abschnittes des Zugelementes SEI erlaubt, sowie aus Rückstellmitteln, welche eine Rückstellkraft auf das Zugelement SEI derart ausüben, dass diese einem "Herausziehen" des Seiles aus der Fixiervorrichtung FIX entgegenwirken.

Bei der gezeigten Ausführungsform der Erfindung sind die Speicher- und Rückstellmittel in Form eines elastischen, flexiblen Bandes BAN ausgebildet, das einerseits mit der Laufkette LAU und andererseits mit einem ersten Ende des Zugelementes SEI verbunden ist. Dieses elastische Band BAN erlaubt es, das Zugelement an seinem freien Ende durch die Fixiervorrichtung FIX hindurch zu ziehen, sodass die Länge des Zugelementes SEI zwischen seinem freien Ende und der Fixiervorrichtung FIX vergrößert wird.

Das elastische Band BAN selbst ist mit seinem zweiten Ende in bezug auf das Zugelement SEI fest angeordnet, beispielsweise ist es in dem Führungsrohr FÜR fixiert oder mit der Verschlusseinrichtung VER fix verbunden, sodass von dem Band BAN bei einem Anziehen an dem Zugelement SEI auf dieses eine Rückstellkraft ausübt wird.

Mit der Fixiervorrichtung FIX wird das ausgezogene Zugelement SEI arretiert, sodass ein Einziehen der Zugelementes SEI in Folge der Rückstellkraft des elastischen Bandes BAN verhindert ist. Mit dem freien Ende des Zugelementes SEI wird nun die innere Haltervorrichtung HAL geschlossen, indem das freie Ende des Zugelementes SEI in der Verschlussvorrichtung VER lösbar fixiert wird.

Die Gleitschutzkette KET kann nun von oben kommend über den Fahrzeugreifen REI gestülpt werden, wobei sich der Bereich der inneren Haltevorrichtung HAL mit der Fixiervorrichtung FIX und der Verschlusseinrichtung VER nach dem Aufstülpen in einem unteren Bereich des Reifens REI befindet. Aufgrund des ausgezogenen Zustandes des Zugelementes SEI steht genügend Länge des Zugelementes SEI in dem Abschnitt ABS zwischen der Fixiervorrichtung FIX und der Verschlusseinrichtung VER zur Verfügung, um diesen Abschnitt ABS des Zugelementes SEI an der Vorderseite des Reifens REI vorbei zu führen und an der Vorderseite des Reifens am Boden vor diesem zur Auflage kommen zu lassen.

Nach dem Überstülpen der Kette über den Reifen wird durch ein einfaches Ziehen an dem vor dem Reifen REI befindlichen Zugelement SEI die Fixierung des Zugelementes SEI durch die Fixiervorrichtung FIX gelöst, und das Zugelement SEI wird durch die Rückstellkraft des elastischen Bandes BAN soweit eingezogen, bis es an den Vorderrand des Reifens REI im Bereich seiner Aufstandsfläche anstößt.

Dadurch verkürzt sich die Länge des Abschnittes ABS' des Zugelementes zwischen der Fixiervorrichtung FIX und der Verschlusseinrichtung VER, wie dies in der Figur 1 mittels der strichlierten Darstellung für den verkürzten, bereits hinter den Reifen gezogenen Abschnitt ABS' des Zugelementes SEI dargestellt ist.

Durch ein kurzes Anfahren des Fahrzeuges wird anschließend durch die Drehung des Reifens REI und die Rückstellkraft des Bandes BAN das Zugelement SEI auf die Rückseite des Reifens gezogen und zieht dort die innere Haltevorrichtung HAL kreisförmig zusammen, sodass die Gleitschutzkette gespannt und zuverlässig gehalten ist.

Vorteilhaft ist es dabei, wenn in dem Bereich zwischen der Fixiervorrichtung FIX und der Verschlusseinrichtung VER die Laufkette LAU mit dem Zugelement SEI beispielsweise mittels einer oder mehreren Hülsen oder Gleitringen GLR verbunden ist, welche eine Relativbewegung der Laufkette LAU und des Zugelementes SEI zueinander erlauben, sodass bei dem Spannen und hinter den Reifen Gleiten des Zugelementes SEI auch die Laufkette LAU in diesem Bereich über die Reifenfläche gezogen wird.

Die Rückstellkraft für das Zugelement SEI wird in dem gezeigten Fall durch ein elastisches Band BAN erzeugt, welches mit einem Ende des Zugelementes SEI verbunden ist. Weiters erlaubt dieses Band BAN die "Verlängerung" des Zugelement-Abschnittes ABS, der zwischen dem freien Ende des Zugelementes SEI und der Fixiervorrichtung FIX liegt.

Ein andere Möglichkeit besteht auch darin, das gesamte Zugelement SEI als elastisches Seil auszubilden, welches sich dann durch ein Anziehen an einem Ende verlängern lässt und sich in diesem Zustand durch seine Eigenelastizität wieder zusammenzieht.

Weiters kann beispielsweise auch eine nicht dargestellte Vorrichtung vorgesehen sein, durch welches Zugelement-Länge aufgewickelt werden kann, wobei die Abwickelbewegung gegen eine Rückstellkraft, die beispielsweise von einer Drehspiralfeder ausgeübt wird, erfolgt, sodass nach einem Lösen der Fixierung des Zugelementes SEI durch die Fixiervorrichtung FIX diese Feder das Zugelement wieder aufwickelt.

Damit die Erfindung problemlos und zur Zufriedenheit der Anwender funktioniert, muss gewährleistet sein, dass es in keiner Phase des Montierens oder Abmontierens der Kette notwendig ist, hinter den Reifen REI zu greifen.

Wie bereits erläutert ist es nach dem Anlegen der Kette KET notwendig, die Fixiervorrichtung FIX zu lösen, sodass das Zugelement SEI eingezogen werden kann bzw. sich einziehen kann. Dies geschieht durch ein einfaches, kurzes nach Außen gerichtetes Ziehen an dem Zugelement SEI, wodurch die Fixierung gelöst wird.

Ein entsprechendes Fixierelement FIX ist im folgenden näher erläutert.

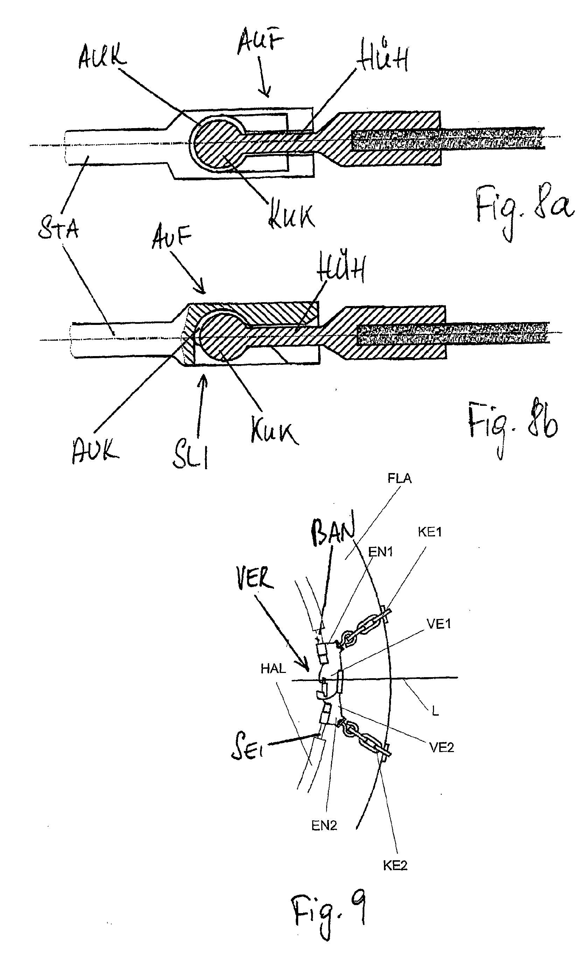

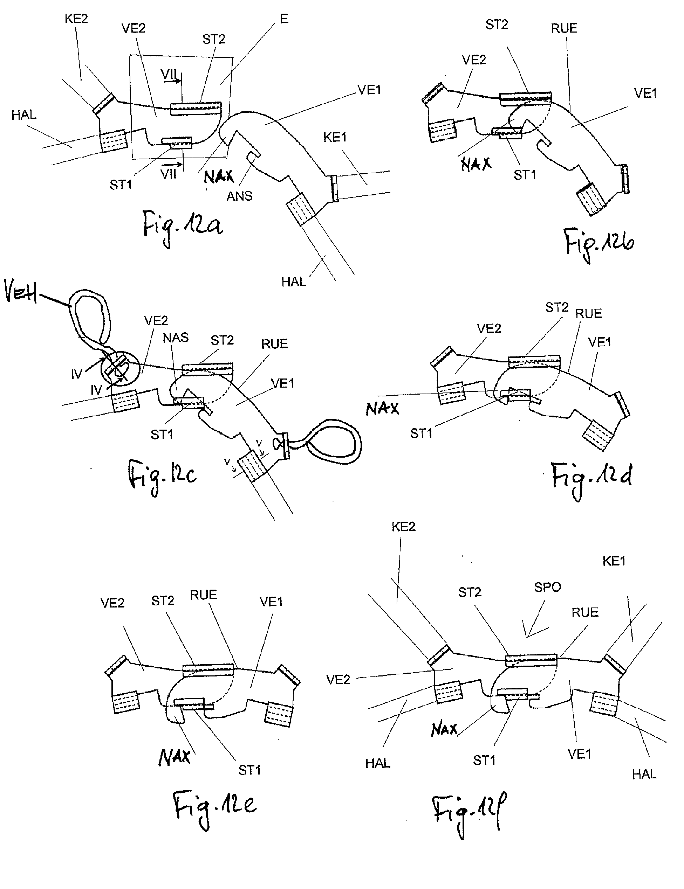

In Fig. 4 und Fig. 5 ist eine Fixiervorrichtung bestehend aus einem Gehäuse GEH gezeigt, durch welches ein elastisches Zugelement, etwa ein Seil oder Draht SEI geführt und in beide Richtungen A, B verschiebbar ist. Dazu weist das Gehäuse GEH zwei Gehäuseöffnungen GO1, GO2 auf, die bei der gezeigten Darstellung an dem Gehäuse GEH im wesentlichen gegenüberliegen. Grundsätzlich müssen diese Öffnungen aber nicht gegenüberliegend angeordnet sein.

Im Inneren des Gehäuses GEH sind zwei Fixierelemente FI1, FI2 drehbar um Achsen AC1, AC2 angeordnet. Die beiden Elemente FI1, FI2 sind dabei beispielsweise auf entsprechenden, nicht dargestellten Bolzen drehbar gelagert. Die beiden Fixierelemente, FI1, FI2, die etwa scheibenförmig sind, weisen jeweils Klemmflächen KF1, KF2 auf, mit denen sie das Zugelement SEI kontaktieren können. Die Klemmflächen KF1, KF2 sind dabei in etwa kreisförmig und weisen einen exzentrischen Bereich auf, der sich entweder durch außermittige Anordnung um die Drehachse AC1, AC2 oder eine entsprechende Ausgestaltung der Kontaktoberfläche KF1, KF2 ergibt.

Die Ausrichtung der Achsen AC1, AC2 ist dabei so gewählt, dass in dem Kontaktbereich zwischen der jeweiligen Klemmfläche KF1, KF2 und dem Seil SEI die Seilrichtung im wesentlichen normal auf die Achse AC1, AC2 steht. Vorteilhaft hinsichtlich des notwendigen Bauraumes ist es weiters, wenn die beiden Achsen AC1 und AC2 wie dargestellt zueinander im wesentlichen parallel sind, grundsätzlich könnten aber die beiden Achsen AC1 und AC2 auch einen beliebigen Winkel zueinander einschließen, solange die beiden Achsen AC1 und AC2 im wesentlichen parallel zu der Seilrichtung im Kontaktbereich sind.

Jedem Fixierelement FI1, FI2 ist in der gezeigten Darstellung ein Gegenelement GE1, GE2 mit entsprechenden Kontaktflächen GF1, GF2 zugeordnet, welches auf der im wesentlichen gegenüberliegenden Seite des Seiles SEI so angeordnet sind, dass die Kontaktflächen GF1, GF2 mit dem Seil SEI in Kontakt stehen. Die beiden Gegenelemente GE1, GE2 sind um Achsen GA1, GA2 verschwenkbar, wobei die Achsen GA1, GA2 jeweils zumindest im wesentlichen parallel zu der Achse AC1, AC2 des zugeordneten Fixierelementes FI1, FI2 sind. Prinzipiell können aber die Gegenelemente GE1, GE2 auch fest in dem Gehäuse GEH angeordnet sein, bzw. kann auch nur ein Gegenelement vorgesehen sein, dass zumindest in den den Fixierelementen gegenüberliegenden Bereichen eine Kontaktfläche aufweist.

Das in der Fig. 4 links dargestellte Fixierelement FI1 weist nun eine Klemmfläche KF1 mit einem in Umfangrichtung exzentrischen Bereich auf, der sich ausgehend von einem in etwa kreisförmigen Bereich nach rechts erstreckt, wobei die Exzentrizität so gestaltet ist, dass der Krümmungsradius größer als im Vergleich zu dem kreisförmigen Umfang ist. An dieser Stelle sei angemerkt, dass die links und rechts angeordneten Elemente auch genau anders in dem Gehäuse angebracht sein könnten, die beschriebene Anordnung also keine Auswirkung auf die Vorrichtung hat. Entsprechend ist das zweite Fixierelemente FI2 im Bereich der Klemmfläche KF2 ausgebildet, allerdings befindet sich hier die Exzentrizität in einem sich nach links erstreckenden Bereich. Durch ein entsprechendes Verdrehen der Fixierelemente FI1, FI2 gelangt das Seil SEI in Kontakt mit den exzentrischen Bereichen der Klemmflächen KF1, KF2, wodurch es zwischen den Kontaktflächen GE1, GE2 und den Klemmflächen KF1, KF2 in Folge der entstehenden Reibung eingeklemmt wird, wie dies im folgenden noch näher erläutert wird.

Zum Freigeben des Seils in Richtung A ist vorerst das in dieser Darstellung linke Fixierelement FI1 gegen die Kraft einer Feder FE mittels eines Fortsatzes FF1 des Fixierelementes FI1, der aus dem Gehäuse GEH herausragt, zu drücken, sodass das Seil SEI für ein Ziehen in Richtung A freigegeben wird. Um anschließend das Seil SEI gegen eine Bewegung in Richtung B, die beispielsweise von einer nicht dargestellten Rückstellkraft ausgeübt wird, zu sichern, wird das rechte Fixierelement FI2 durch Drücken auf den Fortsatz FF2 im Gegenuhrzeigersinn gedreht, sodass das Seil SEI mit seiner exzentrischen Klemmfläche KF2 kontaktiert und in Folge der Reibwirkung das Seil SEI eingeklemmt wird.

Um die Bewegung des Seiles SEI in Richtung B wieder freizugeben, ist lediglich an dem Seil SEI in Richtung A zu ziehen, wodurch das rechte Fixierelement FI2 im Uhrzeigersinn mitgenommen wird und die Klemmwirkung in Richtung B dadurch aufgehoben wird, da in einem schwach oder gar nicht exzentrischen Übergangsbereich von der exzentrischen Form der Klemmfläche KF2 zu der kreisförmigen Form die Reibung abnimmt oder gar kein Kontakt mehr mit dem Seil gegeben ist.

Durch Verdrehen des linken Fixerelementes FI1 im Uhrzeigersinn kann das Seil SEI mit der exzentrischen Klemmfläche KF1 und der Kontaktfläche GF1 in Richtung A eingeklemmt werden, sodass eine Bewegung des Seiles SEI in Richtung A nicht mehr möglich ist. Bei entsprechender Koppelung des Fixierelementes FI1 mit dem zweiten Fixierelement FI2 beispielsweise über eine Feder FE kann dabei die Drehung des Fixierelementes FI1 über die Feder FE bewirkt werden, prinzipiell wäre aber auch eine Handbetätigung des Fixierelementes FI1 möglich.

Die angesprochene Rückstellkraft wird dabei von einer Druckfeder FE erzeugt, die an beiden Fixierelementen angreift. Die Wirkachse der Feder FE verläuft dabei außerhalb der Drehachse AC1 des ersten Fixierelementes FI1 und im wesentlichen durch die Drehachse AC2 des zweiten Fixierelementes FI2. Grundsätzlich könnte aber auch für jedes Fixierelement FI1, FI2 ein eigenes Rückstellmittel etwa in Form einer Druckfeder vorgesehen sein, welches das linke Fixierelement FI1 zu einer Drehung im Uhrzeigersinn und das rechte Fixierelement FI2 zu einer Drehung im Gegenuhrzeigersinn veranlasst.

Grundsätzlich können aber natürlich beispielsweise auch entsprechend angeordnete Zugfedern oder andere Rückstellmittel verwendet werden.

In Fig. 6 ist eine weitere Ausführungsform der Erfindung gezeigt, die mit lediglich einem Fixierelement FI1 auskommt, welches in beiden Umfangrichtungen exzentrische Klemmflächen KF, KF' aufweist. Das Fixierelement FI steht dabei unter der Kraftwirkung einer Druckfeder FE, die an einer Innenseite des Gehäuses GEH abgestützt ist und an einem Vorsprung VO des Fixierelementes FI angreift. Der Angriffspunkt ist dabei so gewählt, dass die Wirklinie der Feder außerhalb der Drehachse AC des Fixierelementes FI verläuft. Gemäß der in der Zeichnung gezeigten Ausführungsform veranlasst dabei die Feder FE das Fixierelement zu einer Drehung im Uhrzeigersinn; grundsätzlich kann die Feder aber auch so angeordnet sein, dass sie das Fixierelement FI zu einer Drehung im Gegenuhrzeigersinn veranlasst, die folgenden Erläuterungen hinsichtlich der Blockierung des Seiles in Richtung A oder B sind dann umgekehrt zu denken.

In seiner "Ruheposition" befindet sich in Folge der Federwirkung der Feder FE das Fixierelement FI in einer Position, in welcher das Seil SEI zwischen dem Gegenelement GE bzw. dessen Kontaktfläche GF und der rechten exzentrischen Klemmfläche KF' des Fixierelementes FI eingeklemmt ist. Wirkt nun beispielsweise eine Kraft auf das Seil in Richtung A, wie dies später noch kurz näher erläutert wird, so ist durch diese Klemmwirkung ein Herausziehen des Seiles SEI zuverlässig verhindert.

Soll nun das Seil SEI in Richtung A bewegt werden, so wird durch Drücken auf einen aus dem Gehäuse GEH herausragenden Fortsatz FF des Fixierelementes FI dieses zu einer Drehbewegung im Gegenuhrzeigersinn gegen die Rückstellkraft der Feder FE veranlasst, und zwar in eine Position, in der die Reibung zwischen dem Seil SEI und den Klemmflächen KF, KF' des Fixierelementes FI minimiert oder vollständig eliminiert ist. Dazu wird das Fixierelement FI etwa so weit gedreht, dass sich der beispielsweise kreisförmige Übergangsbereich zwischen den beiden exzentrischen Klemmfläche KF dem Seil SEI gegenüber befindet.

Das Seil SEI kann nun in Richtung A gezogen werden, wobei dies bei vielen Anwendungen, etwa im Zusammenhang mit Gleitschutzketten, gegen eine Rückstellkraft erfolgt. Damit das Seil SEI in der ausgezogenen Position nach einem Loslassen nicht wieder durch das Gehäuse hindurch zurückgezogen wird, wird das Fixierelement FI weiter im Gegenuhrzeigersinn gegen die Rückstellkraft der Feder FE gedrückt, bis die exzentrische linke Seite der Klemmfläche KF das Seil SEI kontaktiert. In Folge der Reibung wird bei einem Auslassen des Seiles SEI dieses von dem Fixierelement FI gehalten, wobei sich üblicherweise das Seil - in Abhängigkeit von den Dimensionen der gesamten Vorrichtung - noch einige Millimeter in Richtung B bewegen kann, wodurch das Fixierelement FI noch etwas weiter im Gegenuhrzeigersinn gedreht und der Kontaktbereich zwischen Seil SEI und Klemmfläche KF noch vergrößert wird, wodurch die Klemmwirkung noch weiter erhöht wird.

Um das Seil SEI aus der in Richtung B fixierten Position zu lösen, ist lediglich ein kurzes Ziehen an dem Seil in Richtung A notwendig, wodurch das Fixierelement FI zu einer Drehbewegung im Uhrzeigersinn veranlasst und die Klemmwirkung in Richtung B aufgehoben wird. Wirkt wie oben bereits angeführt eine Rückstellkraft auf das Seil SEI in Richtung B, so wird durch diese das Seil in Richtung B gezogen.

Durch die Wirkung der Feder FE wird dabei das Fixierelement FI weiter im Uhrzeigersinn gedreht, sodass nun die rechte exzentrische Klemmfläche KF das Seil SEI einklemmt, sodass eine Bewegung des Seiles in Richtung A nicht mehr möglich ist (Ausgangsposition).

Wie bereits erwähnt, kann/können das/die Gegenelement(e) fest in dem Gehäuse GEH montiert sein. Hinsichtlich der erzielbaren Reibwirkung zwischen dem Seil und den Kontaktflächen in eingeklemmtem Zustand ist es allerdings günstiger, wenn die Gegenelemente GE1, GE2, GE jeweils um eine Achse GA1, GA2, GA, welche im wesentlichen parallel zu der Drehachse des jeweils zugeordneten Fixierelementes verläuft, an einem Bolzen oder ähnlichem drehbar gelagert sind.

Grundsätzlich ist das Gehäuse GEH der erfindungsgemäßen Vorrichtung geschlossen, um das Eindringen von Schmutz, Wasser etc. zu verhindern. Allerdings kann auch vorgesehen sein, dass das Gehäuse GEH wie in der Zeichnung dargestellt teilweise offen ist, falls dies aus bestimmten Gründen vorteilhaft oder günstig ist.

Die Gehäuseöffnungen GO1, GO2 können mit Anschlussstutzen, in denen das Seil SEI noch ein Stück geführt ist, versehen sein, oder sie weisen elastische Abdeckungen auf, damit ein Benutzer vor Verletzungen eines rasch in das Gehäuse ein- bzw. durch dieses durchgezogenes Seiles geschützt ist. Vorteilhaft kann es auch sein, wenn die Gehäuseöffnungen GO1, GO2 abgerundet sind, um das Seil vor Beschädigungen bei unterschiedlichen Ausziehrichtungen zu schützen.

Um die Reibung weiter zu erhöhen und somit die Fixierung des Seiles noch zu verbessern, ist es von Vorteil, wenn die Klemmflächen eine raue Oberfläche aufweisen und/oder Rillen aufweisen. Vorteilhaft ist es in diesem Sinne weiters, wenn die Klemmflächen aus Kunststoff hergestellt sind.

Die Vorrichtung bzw. einzelne Teile können grundsätzlich jeweils wahlweise aus Metall, Kunststoff oder Verbundwerkstoff sein.

Die exzentrischen Bereiche erstrecken sich auf einem Kreissektor ausgehend von einer Nullstellung O von 0 ° - 12 °, bei der Ausführung nach Fig. 4 zu beiden Seiten der Nullstellung.

Das Gehäuse GEH ist schließlich noch mit Befestigungsmitteln BEM versehen, mittels welchen diese an einer Stützkonstruktion, etwa einer Gleitschutzkette für Fahrzeuge, d. h. etwa an einem Laufnetz dieser Kette, oder beispielsweise an einem Spannring SPA, der mit der Kette verbunden ist, befestigbar ist.

Solche wie oben beschriebene Fixiervorrichtungen haben weiters den Vorteil, dass im eingezogenen Zustand das Zugelement SEI so gehalten ist, dass zwar ein weiteres Zusammenziehen der inneren Haltevorrichtung HAL bei entsprechender Krafteinwirkung noch möglich ist, wodurch die Kette auf dem Reifen optimal gespannt ist, dass allerdings ein Aufweiten oder "Aufgehen" der Haltevorrichtung HAL nicht möglich ist.

Für ein einfaches Lösen der inneren Haltevorrichtung HAL, ohne ein Hintergreifen des Reifens REI durch den Benutzer, ist weiters noch eine entsprechende Verschlussvorrichtung VER notwendig, die ebenfalls von der Vorderseite geöffnet werden kann, im Fahrbetrieb aber zuverlässig die innere Haltevorrichtung HAL zusammenhält.

Eine solche Verschlussvorrichtung VER ist in den Figuren 7a - 7c dargestellt. Die Verschlussvorrichtung VER besteht im wesentlichen aus einem zylinder- oder rohrförmigen Körper ROH, welcher mit der Laufkette LAU verbunden ist. Gemäß der gezeigten Ausführungsform ist das Rohr ROH an dem Spannring SPA befestigt, der wiederum mit der Kette verbunden ist. Das Rohr kann beispielsweise aber auch an dem Führungsrohr für das Zugelement angebracht sein. Im Inneren des Rohres ROH ist ein Aufnahmeelement AUF für das eine Ende EN des Zugelementes SEI verschiebbar und ragt in einem Zustand vor der Montage bzw. nach der Demontage an einer Seite aus dem Rohr ROH heraus (Fig. 7a).

Wie dargestellt, weist das eine Ende EN der Zugelementes SEI einen Kugelkopf KUK auf, der sich beispielsweise an einem hülsenförmigen Elemente HÜL befindet, welches auf das Seilende EN aufgeklemmt etc. ist. Das Aufnahmeelement AUF weist eine entsprechende Kugelkopfaufnahme AUK auf, wie dies in den Figuren 8a und 8b näher dargestellt ist. Dabei hat das Aufnahmeelement einen seitlichen Schlitz SLI, durch den das Hülsenelement HÜL mit seinem Kugelkopf KUK sowie sein Hals HÜH in die Aufnahme AUF einsetzbar ist. Ausgehend von der Kugelkopfaufnahme weist das Aufnahmeelement AUF einen sich verjüngenden Querschnitt auf, der im wesentlichen dem Querschnitt des Halses HÜH des Hüllenelementes angepasst ist, sodass in Längsrichtung ein sich Lösen des Kugelkopfes KUK aus der Aufnahme AUF ausgeschlossen ist.

Das Aufnahmeelement AUF ist über einen in der Zeichnung stangenförmigen Fortsatz STA und ein gelenkig mit diesem verbundenes Verbindungselement GVE mit der Laufkette LAU oder einer Seitenkette der Gleitschutzkette verbunden.

Spannt sich nun die Kette KET aufgrund der weiter oben beschriebenen Vorgänge, so wird durch die sich spannende Kette KET das Aufnahmeelement AUF mit dem darin befindlichen Kugelkopf KUK in das Rohr ROH eingezogen, sodass auch ein seitliches Lösen des Kugelkopfes KUK aus der Aufnahme AUF nicht mehr möglich ist und somit die innere Haltevorrichtung "zusammengeschlossen" ist.

Das Verbindungselement GVE steht dabei mit der Lauf- oder Seitenkette LAU einerseits über einen Kettenstrang KEE der Laufkette LAU sowie über ein elastisches Element ELA in Verbindung. Bei dem Spannvorgang wie in Figur 7b dargestellt wird das Aufnahmeelement AUF durch den Kettenstrang KEE in das Rohr ROH eingezogen.

Das Verbindungselement GVE weist weiters in einem Bereich, der sich im eingezogenen Zustand weiter innen in dem Rohr befindet, eine Nase NAS auf. Im verriegelten und fahrbereiten Zustand gemäß der Figur 7c schließlich schnappt diese Nase NAS über den in der Zeichnung unteren Rand des Rohres ROH, sodass während des Betriebes ein Hineingleiten des Verbindungselementes GVE in das Rohr ROH zuverlässig verhindert ist.

Das Aufnahmeelement AUF ist dabei weiters noch von einer Kraft beaufschlagt, die beispielsweise von einer Druckfeder DRF stammt, die an Anschlägen in dem Rohr ROH abgestützt ist und versucht, das Aufnahmeelement AUF in Richtung des Zugelementes SEI aus dem Rohr ROH hinauszudrücken.

Im Fahrbetrieb selbst (Fig. 7c) wird die Zugkraft auf das Verbindungselement GVE von dem elastischen Element ELA ausgeübt, da dieses auch bei einem gewissen Nachgeben der Laufoder Seitenkette LAU im Gegensatz zu dem Kettenelement KEE im Stande ist, eine Kraft auf das Verbindungselement GVE auszuüben, sodass dieses nicht in das Rohr ROH gezogen werden kann.

Im geschlossenen Zustand der vorderen Spann-/Haltevorrichtung SPR der Gleitschutzkette ist über den Kettenstrang KEE die Haltevorrichtung HAL mit der Verschlusseinrichtung VER zuverlässig gehalten, wie dies oben erläutert wurde. Bei einem Öffnen der vorderen Haltevorrichtung SPR, bei dem es nicht notwendig ist, hinter den Reifen zu greifen, fällt die das Verbindungselement GVE in seiner die Verschlussvorrichtung VER verriegelnden Position haltende Kraft weg und das Aufnahmeelement AUF wird aus dem Rohr ROH herausgezogen, wobei das Verbindungselement GVE in das Rohr ROH wie in Fig. 7a dargestellt hineingezogen wird. In dieser Position kann sich dann das Ende EN des Zugelementes SEI aus der Aufnahme AUF lösen und die Gleitschutzkette kann leicht von dem Reifen abgenommen werden.

In den folgenden Zeichnungen ist noch ein weiterer Verschluss dargestellt, der ebenfalls eine einfache Demontage der Gleitschutzkette von dem Reifen erlaubt.

Gemäß Figur 9 besteht ein weiterer Verschluss VER aus zwei Verschlussteilen VE1, VE2, von denen jeder mit einem Kettenstrang KE1, KE2 der Laufklette LAU verbunden ist. Die Kettenstränge KE1, KE2 sind hierbei an den Endbereichen EN1, EN2 der Verbindungsteile VE1, VE2 so angebracht, dass sie in einem gespannten Zustand die beiden Verschlussteile VE1, VE2 gegeneinander fixieren. An einem Ende eines Verschlussteiles VE1 ist das elastische Band BAN angebracht, während an dem anderen Verschlussteil VE2 das "frei" Ende des Zugelementes SEI befestigt ist.

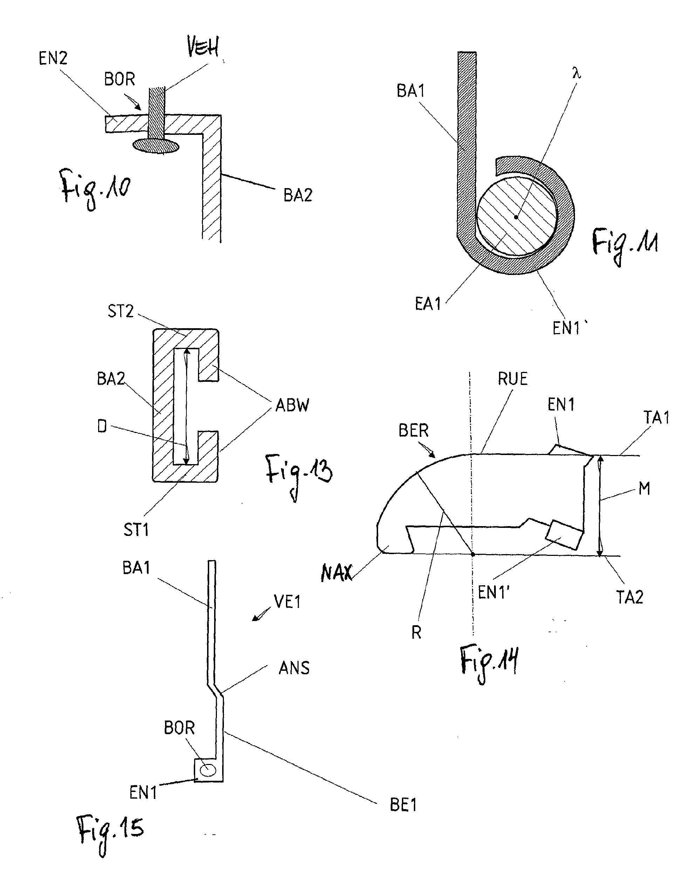

Nach Fig. 10 können die beiden Endbereiche EN1, EN2 der Verschlussteile VE1, VE2 von einer jeweiligen Basis BA1, BA2 weggebogen sein und eine Bohrung BOR zur Aufnahme eines mit dem jeweiligen Kettenstrang KE1, KE2 verbundenen Verbindungselements VEH, beispielsweise eines Hakens aufweisen.

Weiters können die Verschlussteile VE1, VE2 gemäß Fig. 11 um die Längsachse λ der Haltevorrichtung HAL drehbar gelagert sein, so kann beispielsweise an jedem Verschlussteil VE1, VE2 ein einem Endabschnitt der Haltevorrichtung zugeordneter Endbereich EN1' um den jeweiligen Endabschnitt EA1 der Haltevorrichtung HAL gebogen sein. Zweckmäßigerweise ist jedes der Verschlussteile VE1, VE2 einstückig gefertigt.

Die beiden Kettenstränge KE1, KE2 liegen in montiertem Zustand im Bereich der inneren Seitenflanken FLA an und weisen von einer normal zur Seitenflanke FLA verlaufenden Mittelebene L fort.

Durch diese Anordnung der Kettenstränge KE1, KE2 werden die Verschlussteile VE1, VE2 durch von dem Laufnetz LAU eingeleitete Zugkräfte in der Schließposition SPO gehalten.

Gemäß Fig. 12a - 12f weisen die beiden Verschlussteile VE1, VE2 je eine plattenförmige Basis BA1, BA2 auf. Unter einem plattenförmigen Körper wird in diesem Dokument ein Körper verstanden, der von zwei zueinander parallelen Ebenen begrenzt ist, wobei der Abstand zwischen den beiden Ebenen vergleichsweise gering zur Längserstreckung des Körpers ist. Der Abstand zwischen den beiden Ebenen ist jedoch ausreichend zur Erhaltung der Biegesteifigkeit der Verschlussteile VE1, VE2. Die beiden Verschlusselemente VE1, VE2 sind im wesentlichen entlang einer zu den beiden plattenförmigen Basen BAS parallelen Ebene E in eine Schließposition SPO bewegbar, in welcher sie lösbar ineinander greifen. Aufgrund der flachen Ausführungsform der Verschlussteile VE1, VE2 liegen diese in einem montierten Zustand im wesentlichen flach an der inneren Seitenflanke des Reifens REI an.

Die Basis BA1 des ersten der beiden Verschlussteile VE1 geht in eine flache Haltenase NAX über und ist von zwei einander gegenüberliegenden von der Basis BA2 des zweiten Verschlussteils VE2 abstehenden Stegen ST1, ST2 in die Schließposition SPO geführt. Vorzugsweise weist mindestens einer der Stege ST1, ST2 eine Abwinkelung ABW zu der zugehörigen Basis BA1, BA2 auf (Fig. 13). Der Steg ST1, welcher die Haltenase NAX in die Schließposition SPO führt, ist in der Schließposition SPO abschnittsweise von der Haltenase NAX umfasst, wodurch ein Lösen der beiden Verschlussteile in Längsrichtung verhindert werden kann.

Der erste Verschlussteil VE1 weist in einem in die Haltenase NAX übergehenden Bereich BER des Rückens RUE der Basis BA1 einen Krümmungsradius auf der größer als der Normalabstand D zwischen den beiden Stegen ST1, ST2 des zweiten Verschlussteils VE2 ist.

In der Ausführungsform eines Verschlusses nach Fig. 14 ist der Bereich BER als Teil eines Zylindermantels ausgebildet. Der Krümmungsradius Radius R entspricht hierbei im wesentlichen dem Abstand M zwischen einer parallel zu einer Tangente TA1 an den Rücken RUE des ersten Verschlussteils VE1 verlaufenden Tangente TA2 an das Ende der Haltenase HAL. Dadurch kann die Haltenase NAX durch eine Drehung um eine Achse normal zur Ebene E in bzw. aus der Schließposition gedreht werden (Fig. 12c, 12d). Darüber hinaus ist ein der Haltenase NAX gegenüberliegender Rücken RUE der Basis BA1 des ersten Verschlussteils VE1 von dem anderen Steg ST2 in der Schließposition SPO abgestützt (Fig. 12e, 12f).

Durch einen Anschlag ANS, beispielsweise in Form einer zusätzlichen Haltenase, kann der erste Verschlussteil VE1 zusätzlich gegen ein Verrutschen entlang der Längserstreckung des zweiten Verschlussteils VE2 gesichert werden (Fig. 12a-12f). Darüber hinaus begrenzt der Anschlag ANS die Bewegung entlang der Längserstreckung der beiden Verschlussteile während des Schließvorganges, wodurch eine korrekte Montage der Gleitschutzkette gewährleistet werden kann.

Eine andere Variante eines Verschlusses gemäß Fig. 15 sieht vor, dass der erste Verschlussteil VE1 in montiertem Zustand in einem aus dem zweiten Verschlussteil VE2 herausragenden Bereich BE1 im wesentlichen um die Dicke der plattenförmigen Basis BA2 in Richtung der Flanke FLA des Reifens versetzt ist. Der Anschlag ANS wird hierbei durch den Übergang zwischen den zueinander versetzten Bereichen des ersten Verschlussteils gebildet. Im Gegensatz zu der oben genannten Variante wirkt der Ansatz ANS hierbei nicht mit dem Steg ST1, sondern mit dem vorderen Ende des zweiten Verschlussteils VE2 zusammen. Durch die soeben genannte Ausführungsform lässt sich darüber hinaus gewährleisten, dass beide Verschlussteile VE1, VE2 an der Seitenflanke FLA des Reifens REI anliegen.

Durch die von dem Spannschloss SP1 erzeugten Zugkräfte werden der Rücken RUE des ersten Verschlussteils VE1 und der Steg ST2 des zweiten Verschlussteils VE2 in der Schließposition SPO gegeneinander gepresst, wodurch ein Lösen der Verschlussteile VE1, VE2 voneinander verhindert wird. Fallen die Zugkräfte weg, so wirken nur mehr von der federelastischen Haltevorrichtung HAL hervorgerufenen Kräfte auf die beiden Verschlussteile VE1, VE2, wodurch sich die Verschlussteile VE1, VE2 selbsttätig voneinander lösen können.

Durch die erfindungsgemäße Ausführungsform wird ein Selbstlösen der beiden Verschlussteile VE1, VE2 voneinander bei Wegfall der fixierenden Zugkräfte ermöglicht, weshalb sich der Aufwand bei der Demontage der Gleitschutzkette auf ein Minimum reduzieren lässt.

## Patentansprüche

1. Gleitschutzkette mit einem Laufnetz (LAU) und einer mit diesem verbundenen inneren Haltevorrichtung (HAL), welche in einem montierten Zustand an einer inneren Seitenflanke (FLA) eines Reifens (REI) mittels einer Verschlusseinrichtung (VER) lösbar zu einem Ring verschließbar ist, wobei das Laufnetz (LAU) in montiertem Zustand weiters an der Außenseite des Reifens (REI) von zumindest einer Haltespannvorrichtung (SPR) gespannt ist, **dadurch gekennzeichnet, dass** die innere Haltevorrichtung (HAL) zumindest abschnittsweise aus einem elastischen Zugelement (SEI) besteht, welches mit einem freien Ende (EN) in der Verschlusseinrichtung (VER) lösbar fixierbar ist, sodass die innere Haltevorrichtung (HAL) zu einem Ring geschlossen ist, weiters die Haltevorrichtung (HAL) eine Fixiervorrichtung (FIX) umfasst, wobei das Zugelement (SEI) durch die Fixiervorrichtung (FIX) hindurch in Längsrichtung (A, B) verschiebbar ist, und der zwischen der Fixiervorrichtung (FIX) und dem freien Ende (EN) des Zugelementes (SEI) befindliche Abschnitt (ABS, ABS') des Zugelementes (SEI) gegen eine Rückstellkraft verlängerbar ist, und das Zugelement (SEI) zumindest in einem verlängerten Zustand mit der Fixiervorrichtung (FIX) gegen die Rückstellkraft lösbar fixierbar ist.

2. Gleitschutzkette nach Anspruch 1, **dadurch gekennzeichnet, dass** die Rückstellkraft von einem Federelement ausgeübt ist.

3. Gleitschutzkette nach Anspruch 2, **dadurch gekennzeichnet, dass** das Federelement ein elastisches Element (BAN) ist, welches mit einem zweiten Ende des Seiles (SEI) verbunden ist.

4. Gleitschutzkette nach Anspruch 3, **dadurch gekennzeichnet, dass** das elastische Element (ELA) ein Band oder Seil ist.

5. Gleitschutzkette nach Anspruch 1 oder 2, **dadurch gekennzeichnet, dass** das gesamte Zugelement ein elastisches Seil (SEI) ist.

6. Gleitschutzkette nach Anspruch 1 oder 2, **dadurch gekennzeichnet, dass** die Haltevorrichtung (HAL) eine Speichervorrichtung zum Speichern zumindest eines Abschnittes des Zugelementes (SEI) umfasst.

7. Gleitschutzkette nach Anspruch 6, **dadurch gekennzeichnet, dass** die Speichervorrichtung ein von einer Spiralfeder belastetes Rückstellrad zum Aufwickeln eines Abschnittes des Zugelementes (SEI) umfasst.

8. Gleitschutzkette nach einem der Ansprüche 1 bis 7, **dadurch gekennzeichnet, dass** das Seil (SEI) in einem Führungsrohr (ROH) geführt ist, welches mit dem Laufnetz (LAU) verbunden ist.

9. Gleitschutzkette nach einem der Ansprüche 1 bis 8, **dadurch gekennzeichnet, dass** das Zugelement (SEI) in dem Bereich zwischen der Verschlusseinrichtung (VER) und der Fixiervorrichtung (FIX) mit der Laufkette (LAU) gelenkig und verschiebbar verbunden ist.

10. Gleitschutzkette nach Anspruch 9, **dadurch gekennzeichnet, dass** das Zugelement (SEI) mit der Laufkette (LAU) mittels einer oder mehreren Hülsen bzw. Gleitringen (GLR), welche auf die Netzkette aufgeschoben ist/sind, verbunden ist.

11. Gleitschutzkette nach einem der Ansprüche 1 bis 10, **dadurch gekennzeichnet, dass** die Verschlusseinrichtung (VER) aus einem Rohr (ROH) sowie einem Aufnahmeelement (AUF) für das freie Ende (EN) des Zugelementes (SEI) besteht, wobei das Aufnahmeelement (AUF) über zumindest ein Verbindungselement (STA, GVE, ELA, KEE) mit der Laufkette (LAU) bzw. einer Seitenkette der Laufkette (LAU) verbunden und in gespannten Zustand der Laufkette mit dem aufgenommenen freien Ende (EN) des Zugelementes (SEI) in das Rohr (ROH) eingezogen und in dieser Position die Verbindung des Zugelementes (SEI) mit dem Aufnahmeelement (AUF) gegen Lösen gesichert ist.

12. Gleitschutzkette nach Anspruch 11, **dadurch gekennzeichnet, dass** das freie Ende (EN) des Zugelementes (SEI) einen Kugelkopf (KUK) aufweist und das Aufnahmeelement (AUF) eine Kugelkopfaufnahme (AUK) für den Kugelkopf (KUK) sowie einen sich daran in Richtung des Zugelementes (SEI) anschließenden, sich verjüngenden Aufnahmebereich für einen Abschnitt des Zugelementes (SEI), und einen seitlichen Schlitz (SLI) zum Einbringen des freien Endes (EN) des Zugelementes (SEI) in das Aufnahmeelement (AUF) besitzt.

13. Gleitschutzkette nach Anspruch 11 oder 12, **dadurch gekennzeichnet, dass** das Aufnahmeelement (AUF) in gespannten Zustand der Laufkette (LAU) gegen die Rückstellkraft einer Feder (DRF) in das Rohr (ROH) gezogen ist.

14. Gleitschutzkette nach einem der Ansprüche 11 bis 13, **dadurch gekennzeichnet, dass** in einem dem Zugelement (SEI) abgewandten Bereich das Aufnahmeelement (AUF) mit einem Fortsatz (STA) verbunden ist, welcher mit einem Verbindungselement (GVE) gelenkig verbunden und von diesem in gespanntem Zustand der Laufkette (LAU) zumindest abschnittsweise in das Rohr (ROH) hineingezogen ist, und das Verbindungselement (GVE) in entspanntem Zustand der Laufkette (LAU) in das Rohr (ROH) eingezogen ist, sodass das Aufnahmeelement (AUF) zumindest mit dem den Schlitz (SLI) umfassenden Bereich aus dem Rohr (ROH) herausragt.

15. Gleitschutzkette nach einem der Ansprüche 11 bis 14, **dadurch gekennzeichnet, dass** das eine Verbindungselement (GVE) eine Nase (NAS) hat, mittels welcher es in einem gespannten Zustand der Laufkette (LAU) in einer stabilen Position an einer Außenseite des Rohres (ROH) fixierbar ist.

16. Gleitschutzkette nach einem der Ansprüche 11 bis 15, **dadurch gekennzeichnet, dass** das Verbindungselement (GVE) sowohl mit einem Kettenelement (KEE) als auch mit einem elastischen Element (ELA), welches in entspannten Zustand kürzer als das Kettenelement (KEE) ist, in Verbindung steht.

17. Gleitschutzkette nach einem der Ansprüche 1 bis 10, **dadurch gekennzeichnet, dass** die Verschlusseinrichtung (VER) aus zwei Verschlussteilen besteht, wobei die beiden Verschlussteile (VE1, VE2) je eine plattenförmige Basis (BA1, BA2) aufweisen und im wesentlichen entlang einer zu den beiden plattenförmigen Basen (BA1, BA2) parallelen Ebene (E) in eine Schließposition (SPO) bewegbar sind, in welcher sie lösbar ineinander greifen, wobei die Basis (BA1) eines ersten der beiden Verschlussteile (VE1) eine Haltenase (NAS) aufweist, von der Basis (BA2) des zweiten Verschlussteils (VE2) abstehende, einander gegenüberliegende Stege (ST1, ST2) zum Führen der Basis (BA1) des ersten Verschlussteils (VE1) in die Schließposition (SPO) vorgesehen sind, wobei einer der Stege (ST1) in der Schließposition (SPO) zumindest abschnittsweise von der Haltenase (NAS) umfasst ist, sowie ein der Haltenase (NAS) gegenüberliegender Rücken (RUE) der Basis (BA1) des ersten Verschlussteils (VE1) von dem anderen Steg (ST2) abgestützt ist, und die Verschlussteile (VE1, VE2) in montiertem Zustand durch über das an den beiden Verschlussteilen (VE1, VE2) angreifende Laufnetz (LAU) eingeleitete Zugkräfte in der Schließposition (SPO) gehalten sind.

18. Gleitschutzkette nach Anspruch 17, **dadurch gekennzeichnet, dass** zumindest einer der Stege (ST1, ST2) eine Abwinkelung (ABW) zur plattenförmigen Basis (BA2) des zweiten Verschlussteils (VE2) aufweist.

19. Gleitschutzkette nach Anspruch 17 oder 18, **dadurch gekennzeichnet, dass** die beiden Verschlussteile (VE1, VE2) an ihren einander abgewandten Endbereichen (EN1, EN2) mit je einem Kettenstrang (KE1, KE2) des Laufnetzes (LAU) verbunden sind.

20. Gleitschutzkette nach einem der Ansprüche 1 bis 19, **dadurch gekennzeichnet, dass** die Fixiervorrichtung für flexible Zugelemente (SEI) aus einem Gehäuse (GEH) besteht, durch welches das Zugelement (SEI) über Gehäuseöffnungen (GO1, G02) in Längsrichtung (A, B) bewegbar ist, mit zumindest einem um eine Achse (AC1; AC) drehbaren Fixierelement (FI1;FI), wobei in einem Kontaktbereich zwischen dem zumindest einen Fixierelement (FI1; FI) und dem Zugelement (SEI) die Bewegungsrichtung des Zugelementes (SEI) im wesentlichen normal zu der Achse (AC1; AC) des Fixierelementes (FI1; FI) verläuft, und das Fixierelement (FI1; FI) ausgehend von einer Nullstellung (O) zumindest in einer Umfangrichtung eine Klemmfläche (KF1; KF) hat, mittels welcher das Zugmittel (SEI) gegen zumindest ein Gegenelement (GE1; GE) klemmbar und dadurch in einer Bewegungsrichtung (A, B) fixierbar ist, und wobei eine weitere Klemmfläche (KF2; KF') um eine Achse (AC2; AC) drehbar ist, wobei die Bewegungsrichtung des Zugelementes (SEI) in dem Kontaktbereich zwischen der weiteren Klemmfläche (KF2; KF') im wesentlichen normal zu der Achse (AC2; AC) verläuft, die Klemmfläche (KF2; KF') sich ausgehend von einer Nullstellung (O) in einer zu der Umfangrichtung der ersten Klemmfläche (KF1; KF) entgegengesetzten Umfangrichtung eines Fixierelementes (FI2; FI) erstreckt, und das Zugelement (SEI) zwischen der zweiten Klemmfläche (KF2; KF') und einem Gegenelement (GE2; GE) einklemmbar und in zu der ersten Blockierrichtung (A, B) entgegengesetzter Richtung (B, A) blockierbar ist, wobei in der Klemmposition der einen Klemmfläche die andere Klemmfläche aus der Klemmposition herausbewegt oder herausbewegbar ist.

21. Gleitschutzkette nach Anspruch 20, **dadurch gekennzeichnet, dass** die Drehbewegung der beiden Klemmflächen (KF1, KF2; KF, KF') derart gekoppelt ist, dass in der Klemmposition der einen Klemmfläche die andere Klemmfläche aus der Klemmposition herausbewegt oder herausbewegbar ist.

22. Gleitschutzkette nach Anspruch 20 oder 21, **dadurch gekennzeichnet, dass** genau ein Fixierelement (FI) ausgehend von einer Nullstellung (O) in beiden Umfangrichtungen je eine Klemmfläche (KF, KF') besitzt.

23. Gleitschutzkette nach Anspruch 20 oder 21, **dadurch gekennzeichnet, dass** zwei Fixierelemente (FI1, FI2) je eine sich ausgehend von einer Nullstellung in einander entgegengesetzte Umfangrichtungen erstreckende Klemmfläche (KF1, KF2) besitzen.

24. Gleitschutzkette nach einem der Ansprüche 20 bis 23, **dadurch gekennzeichnet, dass** die Fixierelementes (FI1, FI2; FI) exzentrische Bereiche als Klemmflächen (KF1, KF2; KF, KF') aufweisen.

25. Gleitschutzkette nach einem der Ansprüche 20 bis 24, **dadurch gekennzeichnet, dass** das zumindest eine Fixierelement (FI1, FI2; FI) eine Scheibe ist.

26. Gleitschutzkette nach einem der Ansprüche 20 bis 25, **dadurch gekennzeichnet, dass** das zumindest eine Fixierelement (FI1, FI2; FI) einen aus dem Gehäuse (GEH) herausragenden Fortsatz (FO1, FO2; FO) besitzt, mittels welchem das Fixierelement zu einer im Kontaktbereich zu dem Zugelement zu der Blockierrichtung des Zugelementes gleichgerichteten Verdrehung gegen die Rückstellkraft von zumindest einem Rückstellmittel (FE, FE') verdrehbar ist.

27. Gleitschutzkette nach Anspruch 26, **dadurch gekennzeichnet, dass** das zumindest eine Rückstellmittel (FE; FE') eine Druckfeder ist.

28. Gleitschutzkette nach Anspruch 27, **dadurch gekennzeichnet, dass** die Feder (FE) zwischen zwei Fixierelementen (FI1, FI2) eingeklemmt ist, wobei die Angriffspunkte des Federelementes (FE) so gewählt sind, dass die Wirklinie des Federelementes (FE) bei einem Fixierelement (FI1) außerhalb des Drehpunktes (AC1) und bei dem zweiten Fixierelement (FI2) im wesentlichen durch den Drehpunkt (AC2) verläuft.

29. Gleitschutzkette nach Anspruch 27, **dadurch gekennzeichnet, dass** bei genau einem Fixierelement (FI) die Feder im Inneren des Gehäuses (GEH) abgestützt ist und die Wirklinie durch den Angriffspunkt außerhalb des Drehpunktes (AC) des Fixierelementes (FI) verläuft.

30. Gleitschutzkette nach einem der Ansprüche 20 bis 29, **dadurch gekennzeichnet, dass** das zumindest eine Gegenelement (GE1, GE2; GE) in dem Gehäuse (GEH) fest montiert ist.

31. Gleitschutzkette nach einem der Ansprüche 20 bis 30, **dadurch gekennzeichnet, dass** zumindest eines der Gegenelemente (GE1, GE2; GE) um eine Achse (GA1, GA2; GA) drehbar ist, welche im wesentlichen parallel zu der Drehachse (AC1, AC2; AC) des korrespondierenden Fixierelementes (FI1, FI2; FI) verläuft.
